# EUROPÄISCHE PATENTSCHRIFT

(11) **EP 3 338 867 B1**
(45) Veröffentlichungstag und Bekanntmachung des Hinweises auf die Patenterteilung: **25.09.2019**
(21) Anmeldenummer: 16206214.5
(22) Anmeldetag: 22.12.2016
(51) Int. Cl.: B01D 3/00, B01D 3/32, B01D 5/00, B01D 19/00, B01D 19/02

(54) **ANLAGE UND VERFAHREN ZUM ENTALKOHOLISIEREN VON ALKOHOLHALTIGEN GETRÄNKEN**
INSTALLATION AND PROCESS FOR REMOVING ALCOHOL FROM ALCOHOLIC BEVERAGES
INSTALLATION ET PROCÉDÉ DESTINÉS À DÉSALCOOLISER DES BOISSONS ALCOOLISÉES

(43) Veröffentlichungstag der Anmeldung: 27.06.2018
(73) Patentinhaber: GEA Wiegand GmbH, 76275 Ettlingen (DE)
(72) Erfinder: KINNER, Frank, 76275 Rheinstetten (DE); STOEßEL, Kai, 76287 Rheinstetten (DE)
(74) Vertreter: Herzog, Markus

(56) Entgegenhaltungen:
- EP-A1- 0 965 373
- WO-A1-2013/037712
- US-A1- 2015 226 464
- T.O. OMIDEYI ET AL: "The economics of heat pump assisted distillation systems-I. A design and economic model", JOURNAL OF HEAT RECOVERY SYSTEMS, Bd. 4, Nr. 3, 1. Januar 1984 (1984-01-01), Seiten 187-200, XP055171180, ISSN: 0198-7593, DOI: 10.1016/0198-7593(84)90007-9

## Beschreibung

Die vorliegende Erfindung betrifft eine Anlage zum Entalkoholisieren von alkoholhaltigen Getränken, umfassend eine Rektifikationskolonne mit wenigstens einem Zulauf für das alkoholhaltige Getränk, einem Sumpf und einem Kopf, wobei die Rektifikationskolonne derart betreibbar ist, dass aus dem Sumpf entalkoholisiertes Getränk und aus dem Kopf Brüden entnehmbar sind, wenigstens einen Verdampfer, welcher dazu eingerichtet ist, die Rektifikationskolonne mit Dampf zu versorgen, und eine Kondensatoranordnung zum wenigstens teilweisen Kondensieren des aus dem Kopf der Rektifikationskolonne entnommenen Brüden.

Aufgrund des in jüngerer Zeit verstärkten Gesundheitsbewusstseins ist am Markt ein Trend zu alkoholfreien oder alkoholschwachen Getränken erkennbar. Beispielsweise ist in den letzten Jahren ein deutlicher Zuwachs bei den Umsätzen mit entalkoholisierten Bieren und Weinen zu verzeichnen. Derartige Getränke werden hergestellt, indem zucker- oder stärkehaltige Ausgangsprodukte zunächst einer alkoholischen Gärung unterzogen und anschließend entalkoholisiert werden. Da die genannten Getränke eine Vielzahl von Geschmacksstoffen enthalten, die nicht zuletzt während der alkoholischen Gärung entstehen, sollte die Entalkoholisierung möglichst schonend durchgeführt werden, um den Geschmack des Getränks möglichst wenig negativ zu beeinflussen.

In bekannten Anlagen zum Entalkoholisieren von alkoholhaltigen Getränken werden Rektifikationskolonnen eingesetzt, in die das alkoholhaltige Getränk nach einer Vorerwärmung und gegebenenfalls einer Entgasung zugeführt werden. Die Entgasung ist insbesondere bei kohlensäurehaltigen Getränken wie Bier notwendig, um in der Rektifikationskolonne ein Aufschäumen des Getränks zu verhindern. Im Abtriebsteil der Rektifikationskolonne wird der Alkohol aus dem Getränk abgetrennt und das nunmehr entalkoholisierte Getränk sammelt sich im Sumpf der Kolonne, während der Alkohol als Brüden in den Kopf der Kolonne aufsteigt.

Gegebenenfalls kann sich an die Rektifikationskolonne ein Verstärkungsteil anschließen, in denen der im Brüden enthaltene Alkohol auf eine höhere Konzentration verstärkt wird. Der so konzentrierte Alkoholbrüden, der des Weiteren auch noch zusammen mit ihm aus dem alkoholhaltigen Getränk entfernte Geschmacksstoffe enthalten kann, wird in einer Kondensatoranordnung kondensiert. In dem Kondensator wird in bekannten Anlagen ein Kühlmedium eingesetzt, an das der kondensierende Brüden seine Kondensationsenergie abgibt, und das mittels einer Kältemaschine auf die hierfür erforderliche Temperatur abgekühlt wird.

Dem hingegen wird am oder im Sumpf der Kolonne ein Verdampfer zur Erzeugung der für die Rektifikation notwendigen Dämpfe bzw. Brüden betrieben. Dieser Verdampfer wird üblicherweise mit Frischdampf oder Heißwasser beheizt. Somit werden in den bekannten Anlagen an zwei Stellen jeweils beträchtliche Mengen an Energie benötigt, nämlich einerseits für die Kondensation der Alkoholbrüden und andererseits für die Beheizung des der Rektifikationskolonne zugeordneten Verdampfers. Die hierfür aufzubringende Gesamtleistung ist je nach Größe und zeitlichem Durchsatz der Anlage ein erheblicher Kostenfaktor im laufenden Betrieb.

Gattungsgemäße Anlagen zum Abtrennen von Alkohol aus alkoholhaltigen Gemischen sind beispielsweise aus der EP 0 965 373 A1 und der WO 2013/037712 A1 bekannt, in denen die entsprechenden Anlagen jeweils eine Rektifikationskolonne, wenigstens einen Verdampfer und eine Kondensatoranordnung sowie eine Wärmepumpe umfassen, mittels welcher sowohl der Verdampfer als auch die Kondensatoranordnung betreibbar sind.

Es ist daher die Aufgabe der vorliegenden Erfindung, eine gattungsgemäße Anlage zum Entalkoholisieren von alkoholhaltigen Getränken bereitzustellen, die sich durch eine erhöhte Energieeffizienz und somit einen kostensparenden Betrieb auszeichnet.

Zur Lösung dieser Aufgabe umfasst die erfindungsgemäße Anlage zum Entalkoholisieren von alkoholhaltigen Getränken ferner eine Wärmepumpe, mittels welcher sowohl der wenigstens eine Verdampfer als auch die Kondensatoranordnung betreibbar sind. Durch das erfindungsgemäße Vorsehen der Wärmepumpe ist es möglich, die bei der Kondensation des alkoholhaltigen Brüden anfallende Wärme zum Betrieb des Verdampfers zu nutzen, was sich in der Gesamt-Energiebilanz der Anlage vorteilhaft niederschlägt.

Erfindungsgemäß umfasst die erfindungsgemäße Anlage hierzu ferner einen ein Heizmedium enthaltenden Heizkreislauf zur Beheizung des Verdampfers und einen ein Kühlmedium enthaltenden Kühlkreislauf zum Kühlen der Kondensatoranordnung, wobei die Wärmepumpe hierbei dazu betreibbar ist, die Wärme von dem die Kondensatoranordnung verlassenden Kühlmedium zu dem den Verdampfer verlassenden Heizmedium zu übertragen.

Durch diese bauliche Maßnahme werden zwei getrennte Kreisläufe geschaffen, die über die Wärmepumpe einerseits und über den verdampfenden und kondensierenden Brüden andererseits thermisch miteinander gekoppelt sind und deren Gesamt-Energiebilanz im laufenden Betrieb ausgeglichen sein muss, um einen stabilen Betrieb der Anlage gewährleisten zu können. Die von der Wärmepumpe bauartbedingt durch ihre Abwärme in den Wärmekreislauf eingebrachte thermische Leistung muss unter Umständen an einer anderen Stelle wieder aus der Anlage abgeführt werden.

Dies könnte beispielsweise dadurch geschehen, dass das entalkoholisierte Getränk bei einer höheren Temperatur aus der Anlage entnommen wird als derjenigen, bei der das alkoholhaltige Getränk in die Anlage eingegeben Verarbeitung des Getränks vorteilhaft ist, dieses bei möglichst niedriger Temperatur sowohl anzuliefern als auch aus der Anlage zu entnehmen, wird die von der Wärmepumpe in die Anlage eingegebene zusätzliche thermische Energie vorzugsweise durch andere Maßnahmen entnommen. Erfindungsgemäß ist hierzu dem Heizkreislauf oder dem Kühlkreislauf wenigstens ein Wärmetauscher zugeordnet, mittels welchem Wärme aus der Anlage abführbar ist. Dieser Wärmetauscher kann beispielsweise derart gestaltet sein, dass in ihm Kühlwasser zirkuliert, welches das den Verdampfer verlassende Heizmedium abkühlt, bevor dieses der Wärmepumpe zugeführt wird.

Wenngleich im laufenden Betrieb der erfindungsgemäßen Anlage durch die Eingabe von thermischer Energie durch die Wärmepumpe die Gesamt-Energiebilanz der Anlage tendenziell so ist, dass über den oben angesprochenen Wärmetauscher Wärme aus der Anlage abgeführt werden muss, so kann es doch insbesondere beim Hochfahren bzw. Anheizen der Anlage vorteilhaft oder gar notwendig sein, Wärme von außen in die Anlage einzugeben, um die Anlage auf ihre Betriebstemperatur zu bringen. Hierzu ist dem Heizkreislauf oder
dem Kühlkreislauf eine Beheizungsvorrichtung, beispielsweise ein Dampfstrahlinjektor, zugeordnet mittels welchem das Heizmedium oder das Kühlmedium entsprechend erwärmt werden.

Hierbei sind erfindungsgemäß der Wärmetauscher und die Beheizungsvorrichtung dem selben Kreislauf, Heizkreislauf oder Kühlkreislauf, zugeordnet. Insbesondere eine Zuordnung zu dem Heizkreislauf bietet die Vorteile, dass einerseits der Verdampfer durch die Beheizung schnell auf seine Betriebstemperatur kommen kann und andererseits durch die Entnahme von Wärme durch den Wärmetauscher bei der erhöhten Temperatur des Heizmediums dieser Wärmetausch mit einer erhöhten Effizienz ablaufen kann.

In einer Weiterbildung der erfindungsgemäßen Anlage kann diese eine Kompressorpumpe umfassen, welche dazu angeordnet ist, aus der Kondensatoranordnung gasförmig austretenden Rest-Brüden zu verdichten. Durch diese Kompressorpumpe kann sichergestellt werden, dass in den stromaufwärts liegenden Komponenten der Anlage, insbesondere der Rektifikationskolonne, ein Unterdruck herrscht, wodurch sowohl die Siedepunkte der zu verdampfenden Flüssigkeiten herabgesetzt werden als auch das Ausgasen von in dem Getränk gelösten Gasen begünstigt wird.

In einer bevorzugten Weiterbildung kann in Strömungsrichtung des Rest-Brüdens hinter der Kompressorpumpe ein Abscheider zum Abscheiden von flüssigen Bestandteilen des Rest-Brüdens angeordnet sein, sowie gegebenenfalls ein Aroma-Wärmetauscher, welcher dazu angeordnet ist, Wärme von den flüssigen Bestandteilen des Rest-Brüdens auf das Kühlmedium zu übertragen. In dem Abscheider trennen sich gasförmige Bestandteile des Brüdens, wie beispielsweise Kohlendioxid, von den verbleibenden flüssigen Aroma-Bestandteilen ab. Indem der Aroma-Wärmetauscher ebenfalls seine Wärme an den Kühlkreislauf abgibt, kann eine vorteilhafte Integration und eine weiter verbesserte Energieeffizienz erreicht werden, da auf eine separate Kühlung an dieser Stelle verzichtet werden kann. Alternativ ist selbstverständlich auch eine Kühlung mittels eines Kühlwasserkreislaufs oder Ähnlichem denkbar.

Ferner kann die erfindungsgemäße Anlage in Strömungsrichtung des alkoholhaltigen Getränks vor dem Zulauf der Rektifikationskolonne wenigstens eine Vorrichtung zum Vorerwärmen des alkoholhaltigen Getränks umfassen, gegebenenfalls einen Wärmetauscher, welcher dazu angeordnet ist, Wärme von dem entalkoholisierten Getränk auf das alkoholhaltige Getränk zu übertragen, und/oder einen Wärmetauscher, welcher dazu eingerichtet ist, Wärme von dem Heizmedium auf das alkoholhaltige Getränk zu übertragen.

Wie bereits weiter oben angesprochen, wird das alkoholhaltige Getränk in der Regel gekühlt zu der Anlage angeliefert. Daher ist zur Sicherstellung eines korrekten und effizienten Ablaufs der Prozesse in der Rektifikationskolonne eine Vorerwärmung des alkoholhaltigen Getränks wünschenswert. Indem diese Vorerwärmung gegen das mit erhöhter Temperatur aus dem Sumpf der Kolonne entnommene entalkoholisierte Getränk stattfindet, kann ein Teil der in der Kolonne aufgebrachten Wärmeleistung zurückgewonnen werden. Ferner erhöht eine Vorerwärmung mittels des in dem Heizkreislauf zirkulierenden Heizmediums den Integrationsgrad der Gesamtanlage, so dass auch an dieser Stelle Einsparungen möglich sind. Selbstverständlich können jedoch alternativ oder zusätzlich auch andere bzw. weitere Wärmetauscher eingesetzt werden, die mit einem externen Heizmedium betrieben werden, wie beispielsweise Frischdampf.

Wie ebenfalls bereits angesprochen, kann in Strömungsrichtung des alkoholhaltigen Getränks vor dem Zulauf der Rektifikationskolonne eine Entgasungsvorrichtung vorgesehen sein, welche vorzugsweise einen Abscheider umfasst, wobei gegebenenfalls die Entgasungsvorrichtung derart mit der Kondensatoranordnung verbunden ist, dass dieser die aus dem alkoholhaltigen Getränk ausgegasten Gase gemeinsam mit dem aus dem Kopf der Rektifikationskolonne entnommenen Brüden zuführbar sind.

Während in bekannten gattungsgemäßen Anlagen in der Regel als Entgasungsvorrichtungen Entspannungsbehälter mit Einbauten zum Abscheiden oder Zerstören des entstehenden Schaums oder Entgasungsbehälter mit mehreren schräg angeordneten Entgasungsböden, über die das zu entgasende Getränk geführt wird, oder Düsen vorgesehen sind, kann in einer bevorzugten Ausführungsform der vorliegenden Erfindung die Entgasungsvorrichtung ein Fallstromrohrbündel umfassen, welches vorzugsweise mittels einer Heizeinrichtung beheizbar ist. In dieser bevorzugten Ausführungsform der Entgasungsvorrichtung wird das zu entgasende Getränk mit Hilfe einer Verteileinrichtung gleichmäßig auf die Rohre des Fallstromrohrbündels verteilt. Das entweichende Kohlendioxid zusammen mit dem entstehenden Brüden zerreibt den Schaum in der Abwärtsströmung durch seine Scherkraft. In dem am unteren Ende des Fallstromrohrbündels vorgesehenen Abscheider werden schließlich die Flüssigkeit und das Gas voneinander getrennt.

In einer bevorzugten Ausführungsform kann die Kondensatoranordnung der erfindungsgemäßen Anlage wenigstens einen liegend angeordneten Rohrbündelkondensator und/oder wenigstens einen stehend angeordneten Rohrbündelkondensator umfassen, wobei weiter vorzugsweise die Kondensatoranordnung in Strömungsrichtung des Brüdens zunächst einen liegend angeordneten Rohrbündelkondensator und dann einen stehend angeordneten Rohrbündelkondensator umfassen kann, wobei insbesondere das Kühlmedium zunächst den stehend angeordneten Rohrbündelkondensator und dann den liegend angeordneten Rohrbündelkondensator durchströmen kann.

Alternativ oder zusätzlich können jedoch auch andere Bauarten von Kondensatoren Anwendung finden, wie beispielsweise Plattenkondensatoren, Thermoblech-Kondensatoren oder Mischkondensatoren.

Indem das Kühlmedium zunächst den für den Brüden stromabwärts liegenden Teil der Kondensatoranordnung und dann den stromaufwärts liegenden Teil der Kondensatoranordnung durchströmt, kann sichergestellt werden, dass in der letzten Kondensatorstufe das Kühlmedium seine niedrigste Temperatur hat, so dass die gewünschte Funktion der Kondensatoranordnung sichergestellt werden kann.

Des Weiteren betrifft die vorliegende Erfindung ein Verfahren zum Entalkoholisieren von alkoholhaltigen Getränken in einer Rektifikationskolonne, durchzuführen in einer erfindungsgemäßen Anlage, wobei sich entalkoholisiertes Getränk im Sumpf der Rektifikationskolonne und Brüden im Kopf der Rektifikationskolonne sammeln, wobei ferner die Rektifikationskolonne durch einen Verdampfer mit Dampf versorgt wird und wobei der Brüden aus dem Kopf der Rektifikationskolonne in einer Kondensatoranordnung kondensiert wird.

Hierbei werden erfindungsgemäß sowohl der wenigstens eine Verdampfer als auch die Kondensatoranordnung durch eine einzelne Wärmepumpe betrieben. Wie oben ausgeführt, ergeben sich durch den gemeinsamen Betrieb der Kondensatoranordnung und des Verdampfers durch eine einzelne Wärmepumpe energetische Vorteile, die sich in verringerten Betriebskosten der Anlage niederschlagen.

Während in bekannten Anlagen in der Regel das entalkoholisierte Getränk dem Verdampfer zugeführt wird, um daraus den zur Rektifikation notwendigen Dampf zu erzeugen, kann erfindungsgemäß in dem Verdampfer vorzugsweise Wasser, beispielsweise Brauwasser, verdampft werden. Auf diese Weise kann die Verweildauer des entalkoholisierten Getränks in der Anlage bei erhöhter Temperatur verringert werden, so dass der gesamte Entalkoholisierungsvorgang besonders schonend abläuft und die gewünschte Getränkequalität sichergestellt werden kann. Durch den Einsatz von Brauwasser ist zudem sichergestellt, dass die Qualität des Getränks nicht leidet und gleichzeitig können unweigerlich auftretende Flüssigkeitsverluste in der Rektifikationskolonne unmittelbar ausgeglichen werden.

Weitere Merkmale und Vorteile der vorliegenden Erfindung werden aus der nachfolgenden Beschreibung eines Ausführungsbeispiels und eines Vergleichsbeispiels deutlich, die in den beiliegenden Figuren gezeigt sind. Hierbei zeigt:
Fig. 1 eine Ausführungsform einer erfindungsgemäßen Anlage; und
Fig. 2 ein Vergleichsbeispiel einer nicht erfindungsgemäßen Anlage.

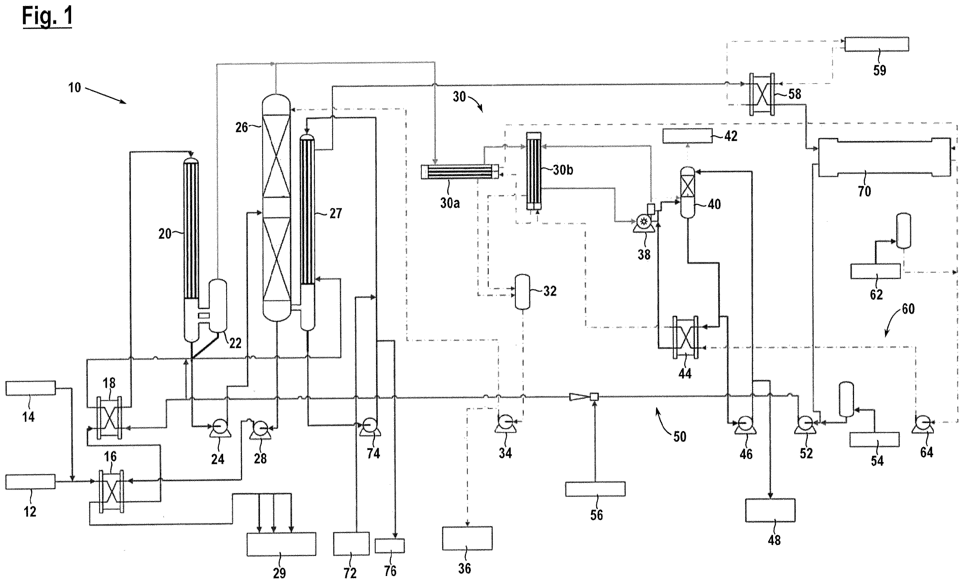

Fig. 1 zeigt schematisch eine Ausführungsform einer erfindungsgemäßen Anlage zum Entalkoholisieren von alkoholhaltigen Getränken, die ganz allgemein mit dem Bezugszeichen 10 bezeichnet ist und beispielsweise zur Entalkoholisierung von Bier eingesetzt werden kann.

Das alkoholhaltige Getränk wird bei einer Produktzuführung 12 in die Anlage 10 eingegeben und weist an dieser Stelle in der Regel eine relativ niedrige Temperatur von typischerweise 2°C auf, da es üblicherweise gekühlt transportiert und angeliefert wird. Des Weiteren enthält angeliefertes alkoholhaltiges Bier 2,5% - 8% (typischerweise etwa 5%) Alkohol und 4 - 6 g/l CO₂. Parallel zu der Produktzuführung 12 ist ein Anschluss 14 für Spülwasser vorgesehen, mittels welchem die gesamte Anlage zur Reinigung gespült werden kann.

Das in die Anlage 10 durch die Produktzuführung 12 eingegebene alkoholhaltige Getränk durchläuft zunächst einen ersten Wärmetauscher 16 und dann einen zweiten Wärmetauscher 18, in denen es stufenweise vorerwärmt wird. Nach seinem Austritt aus dem zweiten Wärmetauscher 18 tritt das alkoholhaltige Getränk dann mit einer erhöhten Temperatur in die Entgasungsvorrichtung 20 ein, die in Form eines Fallstromrohrbündels ausgeführt ist. In der Entgasungsvorrichtung 20 wird das alkoholhaltige Getränk zunächst gleichmäßig auf die mehreren Rohre des Fallstromrohrbündels verteilt, die zudem von außen mittels einer nicht gezeigten Heizvorrichtung erwärmbar sind. Das in den Fallstromrohren aus dem Getränk entweichende CO2 zerreibt zusammen mit dem entstehenden Brüden den entstehenden Schaum in der Abwärtsströmung durch seine Scherkraft.

Des Weiteren umfasst die Entgasungsvorrichtung 20 einen Abscheider 22, in dem das nunmehr größtenteils entgaste alkoholhaltige Getränk und das Gas getrennt werden. Die im Abscheider 22 abgeschiedenen Flüssigkeitströpfchen werden gemeinsam mit dem im Sumpf der Entgasungsvorrichtung 20 gesammelten entgasten alkoholhaltigen Getränk mit Hilfe einer ersten Pumpe 24 zu einer Rektifikationskolonne 26 gepumpt. Das alkoholhaltige Getränk wird hierbei dem mittleren Teil der Rektifikationskolonne 26 zugeführt. Der zur Rektifikation notwendige Dampf wird durch einen weiter unten beschriebenen Verdampfer 27 erzeugt.

In der Rektifikationskolonne 26 sind zur Trennung typischerweise Packungen als Kolonneneinbauten vorgesehen, es können allerdings alternativ auch Füllkörper oder Kolonnenböden in verschiedensten Ausführungen eingesetzt werden. Durch die Wirkung der weiter unten beschriebenen Kompressorpumpe 38 wird im Innenraum der Rektifikationskolonne 26 ein gegenüber der Umgebung verminderter Druck erzeugt, beispielsweise 50 bis 200 mbar, typischerweise etwa 100 mbar.

Im Abtriebsteil der Rektifikationskolonne 26 wird der Alkoholanteil nahezu vollständig aus dem alkoholhaltigen Getränk durch den aufsteigenden Brüden abgetrennt. Das derart entalkoholisierte Getränk sammelt sich im Sumpf der Kolonne 26 an, wobei durch Einstellung von Konstruktions- und Betriebsparametern, wie zum Beispiel der Höhe des Packungsbettes der Rektifikationskolonne 26 und der eingesetzten Energie, der gewünschte Restalkoholgehalt des entalkoholisierten Getränks bei bekanntem Alkoholgehalt des zugeführten alkoholhaltigen Getränks eingestellt werden kann. Es sind typischerweise Restalkoholgehalte von etwa 0 bis 5000 ppm möglich, wobei typischerweise Restalkoholgehalte von < 500 ppm eingestellt werden. Das derart entgaste und entalkoholisierte Getränk, das sich zudem durch den Rektifikationsvorgang bei einer erhöhten Temperatur befindet, kann mittels einer zweiten Pumpe 28 aus dem Sumpf der Rektifikationskolonne 26 abgepumpt und durch den ersten Wärmetauscher 16 geführt werden, wo es einen Teil der von ihm in der Rektifikationskolonne aufgenommenen Wärme an neu zugeführtes alkoholhaltiges Getränk abgibt, so dass die aufgenommene Wärme wenigstens teilweise auf dieses übertragen und somit weiterverwendet wird. Bevor das entalkoholisierte Getränk beim Bezugszeichen 29 aus der Anlage entnommen und beispielsweise in Lagertanks überführt wird, können noch weitere Kühlstufen vorgesehen sein, um es auf eine gewünschte Lagertemperatur abzukühlen, sowie ferner eine Carbonisierung und weitere Verfahren zur Geschmacksverbesserung, wie beispielsweise eine Rückmischung von Frischbier oder eine Zugabe von Aroma-Komponenten.

Der sich im Kopf der Rektifikationskolonne 26 sammelnde Brüden wird gemeinsam mit dem im Abscheider 22 abgetrennten gasförmigen Anteil einer Kondensatoranordnung 30 zugeführt, die aus einer ersten Kondensatorstufe 30a und einer zweiten Kondensatorstufe 30b besteht. Hierbei ist die erste Kondensatorstufe 30a als liegend angeordneter Rohrbündelkondensator ausgeführt, in dem ein Großteil des in dem Brüden enthaltenen Alkohols kondensiert wird. Dieser kondensierte Alkohol wird in einen Tank 32 gefördert, von wo aus er mittels einer weiteren Pumpe 34 entweder beim Bezugszeichen 36 aus der Anlage entnommen und weiter verarbeitet oder erneut dem Kopf der Rektifikationskolonne 26 zugeführt werden kann, wodurch ein Verstärkungseffekt bis zu einer Alkoholkonzentration von typischerweise etwa 80% erreicht werden kann.

Der nach der ersten Kondensatorstufe verbleibende, noch nicht kondensierte Rest-Brüden wird der zweiten Kondensatorstufe 30b zugeführt, die als stehend angeordneter Rohrbündelkondensator ausgebildet ist. Hierin kondensierender Alkohol wird ebenfalls dem Tank 32 zur weiteren Verwendung zugeführt. Der nun größtenteils alkoholfreie Rest-Brüden wird von der bereits oben erwähnten Kompressorpumpe 38 angesaugt, die wie angesprochen ebenfalls für den gewünschten Unterdruck in den stromaufwärtigen Komponenten sorgt. Die Kompressorpumpe 38 kann hierbei beispielsweise als Flüssigkeitsringvakuum-Pumpe, trockenlaufende Vakuumpumpe oder Strahlpumpe ausgeführt sein. Der durch die Kompressorpumpe 38 verdichtete Rest-Brüden kann einerseits in die zweite Kondensatorstufe 30b zur Regulierung des Unterdrucks zurückgeführt werden oder andererseits einem Abscheider oder Wäscher 40 zugeführt werden, wobei auch eine anteilsmäßige Aufteilung zwischen diesen beiden Wegen möglich ist.

Die in dem Abscheider 40 auftretenden Gase, bei denen es sich insbesondere um das in der Entgasungsvorrichtung ausgegaste Kohlendioxid handelt, werden beim Bezugszeichen 42 in die Atmosphäre abgegeben. Die in dem Abscheider 40 abgeschiedenen flüssigen Bestandteile, die in erster Linie von den Alkoholbrüden in der Rektifikationskolonne 26 mitgerissene Aroma-Komponenten des alkoholhaltigen Getränks sowie Alkoholreste umfassen, werden anteilsmäßig einem Aroma-Wärmetauscher 44 zugeleitet und durch eine Pumpe 46 beim Bezugszeichen 48 aus der Anlage entnommen bzw. in den Kopf des Abscheiders 40 zurückgepumpt.

Die in Fig. 1 dargestellte Anlage 10 zeichnet sich dadurch aus, dass sie zwei geschlossene Kreisläufe umfasst, nämlich einen Heizkreislauf 50, in dem ein Heizmedium zirkuliert, und einen Kühlkreislauf 60, in dem ein Kühlmedium zirkuliert. Die thermische Verbindung zwischen dem Heizkreislauf 50 und dem Kühlkreislauf 60 wird unter anderem über eine Wärmepumpe 70 hergestellt, die in der Weise einer umgekehrten Kältemaschine Wärme von dem Kühlkreislauf zu dem Heizkreislauf pumpt.

Zur Verdeutlichung der Funktion der beiden Kreisläufe sei nun zunächst die Zirkulation des Heizmediums im Heizkreislauf 50 betrachtet, beginnend bei ihrem Austritt aus der Wärmepumpe 70, bei dem sie eine erhöhte Temperatur aufweist. Es sei an dieser Stelle angemerkt, dass die Heizflüssigkeit beispielsweise durch Wasser dargestellt sein kann, was beispielsweise beim Auftreten von Leckagen eine Kontaminierung der in der Anlage 10 verarbeiteten flüssigen Lebensmittel ausschließt.

Das aus der Wärmepumpe 70 mit erhöhter Temperatur austretende Heizmedium wird von einer Pumpe 52 zirkuliert. Im Bereich der Pumpe 52 ist ferner ist ferner ein Zulauf 54 vorgesehen, über den Heizmedium, also beispielsweise Wasser, in den Heizkreislauf 50 nachgeführt werden kann, beispielsweise im Fall, dass Verluste aufgetreten sind. Des Weiteren ist dem Heizkreislauf eine Beheizungsvorrichtung 56 zugeordnet, die beispielsweise einen Dampfstrahlinjektor umfassen kann.

Wenngleich im laufenden Betrieb die von der Wärmepumpe in den Wärmekreislauf 50 eingegebene thermische Energie zum Ausgleichen von Verlusten mehr als ausreicht, so muss das Heizmedium beim Hochfahren der Anlage 10 doch zunächst auf eine Temperatur gebracht werden, die ausreicht, um den Verdampfer 27 ordnungsgemäß zu betreiben. Diese Aufgabe kann von der Beheizungsvorrichtung 56 erfüllt werden, wobei nach abgeschlossenem Hochfahren der Anlage 10 im laufenden Betrieb die Beheizungsvorrichtung 56 wieder stillgelegt werden kann.

Anschließend durchläuft das Heizmedium den bereits oben beschriebenen zweiten Wärmetauscher 18, in dem es einen Teil seiner Wärme an das zugeführte alkoholhaltige Getränk abgibt, um dieses vorzuerwärmen. Hiernach tritt das Wärmemedium in den Verdampfer 27 ein, woraufhin in diesem durch die von dem Wärmemedium abgegebene Wärme Dampf zum Betreiben der Rektifikationskolonne erzeugt wird.

Anschließend tritt das Wärmemedium wieder aus dem Verdampfer 27 aus und wird einem weiteren Wärmetauscher 58 zugeführt, mittels welchem Wärme aus dem Heizkreislauf 50 entnehmbar ist. Dieser Wärmetauscher 58 zur Entnahme von Wärme aus dem Heizkreislauf 50 ist notwendig, um die Gesamtenergiebilanz der Anlage 10 einzustellen. Wie bereits angesprochen, wird durch die mechanische Antriebsleistung der Wärmepumpe 70 zusätzliche thermische Energie in den Heizkreislauf 50 eingegeben. Da die von dem Kühlkreislauf 60 zu dem Wärmekreislauf 50 übertragene Wärme in der Anlage verbleibt und auch das Getränk vorzugsweise mit einer ähnlichen Temperatur aus der Anlage entnommen wird, wie es eingegeben worden ist, kann durch den Wärmetauscher 58 die zusätzlich eingegebene thermische Leistung der Wärmepumpe 70 entnommen werden, um eine unerwünschte Aufheizung der Anlage 10 zu verhindern. Hierzu kann beispielsweise eine Kühlwasserquelle 59 vorgesehen sein, die den Wärmetauscher 58 mit Kühlwasser versorgt.

Das Heizmedium, das nun in den diversen Wärmetauschern und in dem Verdampfer ein Teil seiner Wärme abgegeben hat, wird an dieser Stelle wieder der Wärmepumpe 70 zugeführt und erneut erwärmt. Die zum Erwärmen des Heizmediums im Wärmekreislauf 50 notwendige Energie wird wie angesprochen einem in dem gestrichelt dargestellten Kühlkreislauf 60 zirkulierendem Kühlmedium entnommen.

Auch dem Kühlkreislauf 60 ist eine Kühlmediumquelle 62 zugeordnet, mittels derer Kühlmedium in den Kühlkreislauf 60 nachgeführt werden kann. Auch bei dem Kühlmedium kann es sich um Wasser handeln, was ebenfalls zu den oben im Zusammenhang mit dem Heizmedium genannten Vorteilen führt. In dem Kühlkreislauf 60 ist eine Kühlmediumpumpe 64 vorgesehen, die das Kühlmedium in Zirkulation hält.

Das durch die Wirkung der Wärmepumpe 70 gekühlte Kühlmedium wird zunächst zum oben beschriebenen Aroma-Wärmetauscher 44 geführt, wo es wie angesprochen einen Teil der Wärme der in dem Abscheider 40 abgeschiedenen flüssigen Bestandteile des Rest-Brüdens aufnimmt. Anschließend durchströmt es nacheinander die zweite Kondensatorstufe 30b und die erste Kondensatorstufe 30a, wobei es dort die Kondensationswärme der in diesen Kondensatorstufen kondensierenden Bestandteile des Brüdens aufnimmt.

Das auf diese Weise erwärmte Kühlmedium wird nun zu der Wärmepumpe 70 zurückgeführt, von welcher die im letzten Umlauf aufgenommene Wärme wiederum an das Heizmedium übertragen wird. Es zeigt sich somit, dass der Wärmekreislauf 50 und der Kühlkreislauf 60 einerseits wie angesprochen über die Wärmepumpe 70 miteinander verbunden sind, andererseits jedoch auch indirekt über den in der Kondensatoranordnung 30 kondensierenden Brüden, der einerseits seine Kondensationswärme an das Kühlmedium abgibt und andererseits zuvor durch die Wärmeleistung des Heizmediums verdampft worden ist, die dieses in dem Verdampfer 27 abgegeben hat.

Nachzutragen bleibt noch, dass wenngleich der Verdampfer 27 bereits entalkoholisiertes Getränk verdampfen kann, um die Rektifikationskolonne zu betreiben, beispielsweise indem er als einfacher Sumpfverdampfer ausgeführt ist, in dem das heiße Wärmemedium in Rohren durch den Sumpf der Rektifikationskolonne 26 geführt wird und dort Brüden erzeugt, doch auch eine Quelle 72 für Brauwasser zum Verdampfen vorgesehen werden kann. Indem anstelle des Getränks aus dem Sumpf der Rektifikationskolonne 26 dieses Brauwasser in dem Verdampfer 27 verdampft wird, kann die Standzeit verlängert und die Erhitzung des entalkoholisierten Getränks verringert werden, was sich positiv auf die sensorischen Eigenschaften des Getränks auswirkt.

Zum Eingeben und Zirkulieren des Brauwassers in dem Verdampfer 27 ist ferner eine Brauwasserpumpe 74 vorgesehen, wobei das von der Brauwasserquelle 72 bereitgestellte Brauwasser im Überschuss eingegeben und über den Abfluss 76 wieder ausgeschleut werden kann, um eine Aufkonzentrierung von Inhaltstoffen zu vermeiden.

Es sei ferner nachgetragen, dass beispielhafte Temperaturwerte für das Heizmedium 60°C bei seinem Austritt aus der Wärmepumpe und 50°C bei seinem Eintritt in die Wärmepumpe betragen, während das Kühlmedium mit 20°C in die Wärmepumpe eintreten und auf 15°C abgekühlt wieder austreten kann.

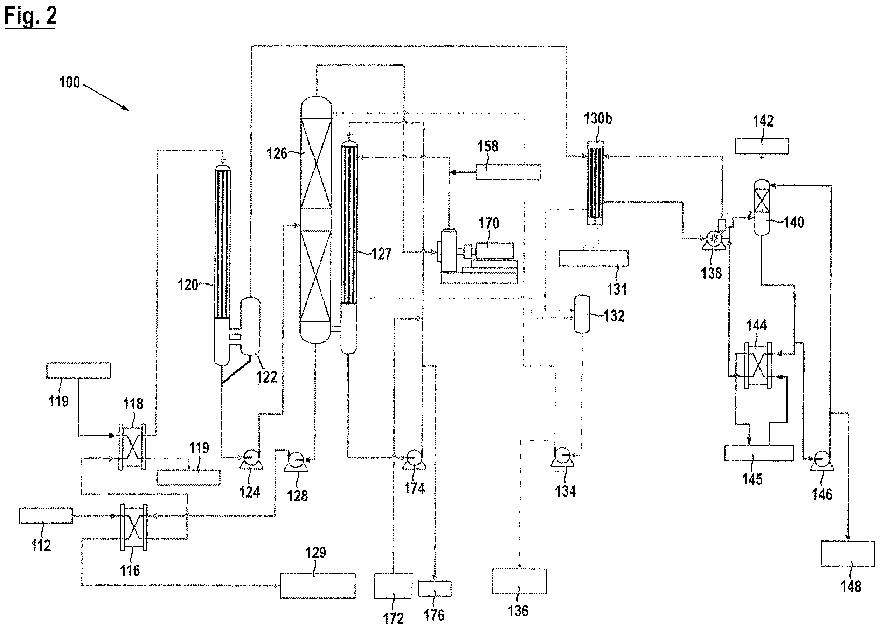

Fig. 2 zeigt nun ein Vergleichsbeispiel einer nicht erfindungsgemäßen Anlage, die ganz allgemein mit dem Bezugszeichen 100 bezeichnet ist. Zahlreiche Komponenten der Anlage 100 entsprechen denjenigen aus der Anlage 10 der Ausführungsform und sind mit den selben Bezugszeichen, erhöht um 100, bezeichnet. Im Gegensatz zu der Ausführungsform aus Fig. 1 umfasst die Anlage 100 des Vergleichsbeispiels jedoch nicht die beiden Kreisläufe 50 und 60, sondern einen mechanischen Brüdenverdichter 170, der direkt den Brüden aus der Rektifikationskolonne 126 verdichtet.

In ähnlicher Weise wie in der Ausführungsform wird beim Bezugszeichen 112 ein alkoholhaltiges Getränk in die Anlage 100 eingegeben und über zwei Wärmetauscher 116 und 118 vorerwärmt. Hierbei wird im Gegensatz zur ersten Ausführungsform der zweite Wärmetauscher 118 mit Hilfe einer Dampfquelle 119 betrieben. Anschließend wird das alkoholhaltige Getränk der Entgasungsvorrichtung 120 mit ihr zugeordnetem Abscheider 122 zugeführt, deren Funktion derjenigen aus Fig. 1 entspricht.

Das so entgaste Getränk wird der Rektifikationskolonne 126 zugeführt, für deren Beschreibung ebenfalls auf die Beschreibung der Kolonne 26 aus Fig. 1 verwiesen sei. Während das entalkoholisierte Getränk in der Anlage 100 aus Fig. 2 beim Bezugszeichen 129 aus der Anlage 100 in analoger Weise zu der Anlage 10 aus Fig. 1 abgeführt wird, wird der sich im Kopf der Rektifikationskolonne 126 ansammelnde Brüden dem mechanischen Brüdenverdichter 170 zugeführt, der in der Anlage 100 die Funktion der Wärmepumpe übernimmt. Ferner ist an dieser Stelle auch die Heizvorrichtung 158 vorgesehen, die in ähnlicher Weise wie oben beschrieben eine Frischdampfeinspeisung umfassen und zum Anfahren der Anlage eingesetzt werden kann.

Der mechanische Brüdenverdichter 170 kann hierbei beispielsweise als Radialventilator, Turbokompressor oder Rootsgebläse ausgebildet sein und erhöht durch mechanische Kompression den Energiegehalt des Brüdens. Der so verdichtete und energetisch angereicherte Brüden wird nun als Heizmedium dem Verdampfer 127 zugeführt, wo er einerseits den zum Betrieb der Rektifikationskolonne notwendigen Dampf erzeugt und andererseits selbst kondensiert. Auf diese Weise übernimmt in der Anlage 100 aus Fig. 2 der Verdampfer 127 auch die Aufgabe eines Kondensators.

Der in dem Verdampfer 127 kondensierte Brüden wird analog zu dem in der ersten Kondensatorstufe 30a in der Ausführungsform aus Fig. 1 kondensierten Brüden einem Tank 132 zugeführt, aus welchem er mit Hilfe einer Pumpe 134 beim Bezugszeichen 136 entnommen oder erneut dem Kopf der Rektifikationskolonne 126 zugeführt werden kann.

Da der Brüden aus der Rektifikationskolonne 126 wie angesprochen in dem Verdampfer 127 kondensiert wird, wird das in der Entgasungsvorrichtung 120 ausgegaste Gas alleine dem stehend angeordneten Rohrbündelkondensator 130b zugeführt, der der zweiten Kondensatorstufe 30b aus Fig. 1 entspricht. Dieser stehend angeordnete Rohrbündelkondensator 130b wird durch eine Kühlwasserquelle 131 gekühlt, wobei in ihm anfallendes Kondensat ebenfalls dem Tank 132 zugeführt wird. An den stehend angeordneten Rohrbündelkondensator 130b schließen sich in analoger Weise zu der Anlage 10 aus Fig. 1 eine Kompressorpumpe 138, ein Abscheider 140, aus dem Gas beim Bezugszeichen 142 an die Atmosphäre abgegeben wird, und ein Aroma-Wärmetauscher 144 mit einer Aromenpumpe 146 an, mittels welcher beim Bezugszeichen 148 die kondensierten Aromastoffe aus der Anlage 100 entnommen werden können. Es sei lediglich darauf hingewiesen, dass auch der Aroma-Wärmetauscher 144 mittels einer externen Kühlquelle 145 gekühlt werden muss, da wie angesprochen in der Anlage 100 auf einen zentralen Kühlkreislauf verzichtet wird.

Wenngleich in der Anlage 100 im Gegensatz zur Anlage 10 aus Fig. 1 somit keine geschlossenen Wärme- und Kühlkreisläufe vorliegen, sondern durch die Dampfquelle 119 und die beiden Kühlwasserquellen 131 und 145 zusätzliche Energie zum Heizen bzw. Kühlen von Komponenten der Anlage aufgewendet werden muss, so kann doch durch den hervorragenden Wirkungsgrad des mechanischen Brüdenverdichters 170 gerade bei großen Anlagen mit einer hohen Durchsatzrate von Getränk die Anlage 100 noch energieeffizienter als die Anlage 10 aus Fig. 1 arbeiten.

## Patentansprüche

1. Anlage zum Entalkoholisieren von alkoholhaltigen Getränken, umfassend:
- eine Rektifikationskolonne (26) mit wenigstens einem Zulauf für das alkoholhaltige Getränk, einem Sumpf und einem Kopf,
wobei die Rektifikationskolonne (26) derart betreibbar ist, dass aus dem Sumpf entalkoholisiertes Getränk und aus dem Kopf Brüden entnehmbar sind;
- wenigstens einen Verdampfer (27), welcher dazu eingerichtet ist, die Rektifikationskolonne (26) mit Dampf zu versorgen; und
- eine Kondensatoranordnung (30) zum wenigstens teilweisen Kondensieren des aus dem Kopf der Rektifikationskolonne (26) entnommenen Brüden;
eine Wärmepumpe (70), mittels welcher sowohl der Verdampfer (27) als auch die Kondensatoranordnung (30) betreibbar sind; und
einen ein Heizmedium enthaltenden Heizkreislauf (50) zur Beheizung des Verdampfers (27) und einen ein Kühlmedium enthaltenden Kühlkreislauf (60) zum Kühlen der Kondensatoranordnung (30), wobei die Wärmepumpe (70) dazu betreibbar ist, Wärme von dem die Kondensatoranordnung (30) verlassenden Kühlmedium zu dem den Verdampfer (27) verlassenden Heizmedium zu übertragen, wobei dem Heizkreislauf (50) oder dem Kühlkreislauf (60) wenigstens ein Wärmetauscher (58) zugeordnet ist, mittels welchem Wärme aus der Anlage abführbar ist, wobei dem Heizkreislauf (50) oder dem Kühlkreislauf (60) eine Beheizungsvorrichtung (56), beispielsweise ein Dampfstrahlinjektor, zugeordnet ist, **dadurch gekennzeichnet, dass** der Wärmetauscher (58) und die Beheizungsvorrichtung (56) dem selben Kreislauf, Heizkreislauf (50) oder Kühlkreislauf (60), zugeordnet sind.

2. Anlage nach Anspruch 1, **dadurch gekennzeichnet, dass** sie eine Kompressorpumpe (38) umfasst, welche dazu angeordnet ist, aus der Kondensatoranordnung (30) gasförmig austretenden Rest-Brüden zu verdichten.

3. Anlage nach Anspruch 2, **dadurch gekennzeichnet, dass** in Strömungsrichtung des Rest-Brüdens hinter der Kompressorpumpe (38) ein Abscheider (40) zum Abscheiden von flüssigen Bestandteilen des Rest-Brüdens angeordnet ist, sowie gegebenenfalls ein Aroma-Wärmetauscher (44), welcher dazu angeordnet ist, Wärme von den flüssigen Bestandteilen des Rest-Brüdens auf das Kühlmedium zu übertragen.

4. Anlage nach einem der vorhergehenden Ansprüche, **dadurch gekennzeichnet, dass** sie in Strömungsrichtung des alkoholhaltigen Getränks vor dem Zulauf der Rektifikationskolonne (26) wenigstens eine Vorrichtung zum Vorerwärmen des alkoholhaltigen Getränks umfasst, gegebenenfalls einen Wärmetauscher (16), welcher dazu angeordnet ist, Wärme von dem entalkoholisierten Getränk auf das alkoholhaltige Getränk zu übertragen, und/oder einen Wärmetauscher (18), welcher dazu eingerichtet ist, Wärme von dem Heizmedium auf das alkoholhaltige Getränk zu übertragen.

5. Anlage nach einem der vorhergehenden Ansprüche, **dadurch gekennzeichnet, dass** in Strömungsrichtung des alkoholhaltigen Getränks vor dem Zulauf der Rektifikationskolonne (26) eine Entgasungsvorrichtung (20) vorgesehen ist, welche vorzugsweise einen Abscheider (22) umfasst, wobei gegebenenfalls die Entgasungsvorrichtung (20) derart mit der Kondensatoranordnung (30) verbunden ist, dass dieser die aus dem alkoholhaltigen Getränk ausgegasten Gase gemeinsam mit dem aus dem Kopf der Rektifikationskolonne (26) entnommenen Brüden zuführbar sind.

6. Anlage nach Anspruch 5, **dadurch gekennzeichnet, dass** die Entgasungsvorrichtung (20) ein Fallstromrohrbündel umfasst, welches vorzugsweise mittels einer Heizeinrichtung beheizbar ist.

7. Anlage nach einem der vorhergehenden Ansprüche, **dadurch gekennzeichnet, dass** die Kondensatoranordnung (30) wenigstens einen liegend angeordneten Rohrbündelkondensator (30a) und/oder wenigstens einen stehend angeordneten Rohrbündelkondensator (30b) umfasst.

8. Anlage nach Anspruch 7, **dadurch gekennzeichnet, dass** die Kondensatoranordnung (30) in Strömungsrichtung des Brüdens zunächst einen liegend angeordneten Rohrbündelkondensator (30a) und dann einen stehend angeordneten Rohrbündelkondensator (30b) umfasst, wobei vorzugsweise das Kühlmedium zunächst den stehend angeordneten Rohrbündelkondensator (30a) und dann den liegend angeordneten Rohrbündelkondensator (30b) durchströmt.

9. Verfahren zum Entalkoholisieren von alkoholhaltigen Getränken in einer Rektifikationskolonne, durchzuführen in einer Anlage (10) nach einem der vorhergehenden Ansprüche, wobei sich entalkoholisiertes Getränk im Sumpf der Rektifikationskolonne (26) und Brüden im Kopf der Rektifikationskolonne (26) sammeln,
wobei die Rektifikationskolonne (26) durch wenigstens einen Verdampfer (27) mit Dampf versorgt wird, und
wobei der Brüden aus dem Kopf der Rektifikationskolonne (26) in einer Kondensatoranordnung (30) kondensiert wird; wobei sowohl der wenigstens eine Verdampfer (27) als auch die Kondensatoranordnung (30) durch eine einzelne Wärmepumpe betrieben werden.

10. Verfahren nach Anspruch 9, **dadurch gekennzeichnet, dass** dem Verdampfer Wasser, beispielsweise Brauwasser, zum Verdampfen zugeführt wird.

## Claims

1. Plant for dealcoholising alcoholic beverages, comprising:
- a rectification column (26) having at least one inlet for the alcoholic beverage, a sump and a top, the rectification column (26) being operable such that dealcoholised beverage can be removed from the sump and exhaust vapour can be removed from the top;
- at least one evaporator (27) which is configured to supply the rectification column (26) with vapour; and
- a condenser arrangement (30) for condensing the exhaust vapour removed from the top of the rectification column (26) at least in part;
a heat pump (70) by means of which both the evaporator (27) and the condenser arrangement (30) can be operated; and
a heating circuit (50), containing a heating medium, for heating the evaporator (27) and a cooling circuit (60), containing a cooling medium, for cooling the condenser arrangement (30), it being possible for the heat pump (70) to be operated so as to transfer heat from the cooling medium leaving the condenser arrangement (30) to the heating medium leaving the evaporator (27), at least one heat exchanger (58) which can remove heat from the plant being associated with the heating circuit (50) or with the cooling circuit (60), a heating device (56), for example a steam injector, being associated with the heating circuit (50) or with the cooling circuit (60), **characterised in that** the heat exchanger (58) and the heating device (56) are associated with the same circuit, heating circuit (50) or cooling circuit (60).

2. Plant according to claim 1, **characterised in that** it comprises a compressor pump (38) which is arranged to compress residual exhaust vapour issuing in gas form from the condenser arrangement (30).

3. Plant according to claim 2, **characterised in that** arranged in the flow direction of the residual exhaust vapour downstream of the compressor pump (38) is a separator (40) for separating liquid components of the residual exhaust vapour, and optionally an aroma heat exchanger (44) which is arranged to transfer heat from the liquid components of the residual exhaust vapour to the cooling medium.

4. Plant according to any of the preceding claims, **characterised in that** it comprises in the flow direction of the alcoholic beverage upstream of the inlet of the rectification column (26) at least one device for preheating the alcoholic beverage, optionally a heat exchanger (16) which is arranged to transfer heat from the dealcoholised beverage to the alcoholic beverage, and/or a heat exchanger (18) which is configured to transfer heat from the heating medium to the alcoholic beverage.

5. Plant according to any of the preceding claims, **characterised in that** provided in the flow direction of the alcoholic beverage upstream of the inlet of the rectification column (26) is a degassing device (20) which preferably comprises a separator (22), the degassing device (20) being optionally connected to the condenser arrangement (30) such that the gases outgassed from the alcoholic beverage can be fed together with the exhaust vapour removed from the top of the rectification column (26) to the condenser arrangement.

6. Plant according to claim 5, **characterised in that** the degassing device (20) comprises a falling film tube bundle which can preferably be heated by a heating device.

7. Plant according to any of the preceding claims, **characterised in that** the condenser arrangement (30) comprises at least one horizontally arranged shell and tube condenser (30a) and/or at least one upright shell and tube condenser (30b).

8. Plant according to claim 7, **characterised in that** the condenser arrangement (30) comprises firstly a horizontally arranged shell and tube condenser (30a) and then an upright shell and tube condenser (30b) in the flow direction of the exhaust vapour, the cooling medium preferably firstly flowing through the upright shell and tube condenser (30a) and then through the horizontal shell and tube condenser (30b).

9. Method for dealcoholising alcoholic beverages in a rectification column, to be carried out in a plant (10) according to any of the preceding claims, wherein dealcoholised beverage collects in the sump of the rectification column (26) and exhaust vapour collects in the top of the rectification column (26),
wherein the rectification column (26) is supplied with vapour by at least one evaporator (27), and the exhaust vapour from the top of the rectification column (26) is condensed in a condenser arrangement (30);
wherein both the at least one evaporator (27) and the condenser arrangement (30) are operated by a single heat pump.

10. Method according to claim 9, **characterised in that** water, for example brewing water, is fed into the evaporator in order to be evaporated.

## Revendications

1. Installation pour désalcooliser des boissons alcoolisées, comprenant :
- une colonne de rectification (26) avec au moins une alimentation pour la boisson alcoolisée, un pied et une tête,
dans laquelle la colonne de rectification (26) peut fonctionner de manière telle que peuvent être extraites, du pied, une boisson désalcoolisée et, de la tête, des vapeurs ;
- au moins un évaporateur (27), lequel est agencé pour alimenter en vapeur la colonne de rectification (26) ; et
- un dispositif formant condensateur (30) pour condenser au moins partiellement les vapeurs extraites de la tête de la colonne de rectification (26) ; une pompe à chaleur (70) à l'aide de laquelle peuvent fonctionner non seulement l'évaporateur (27) mais aussi le dispositif formant condensateur (30) ; et un circuit de chauffe (50) contenant un milieu chauffant pour chauffer l'évaporateur (27) et un circuit de refroidissement (60) contenant un milieu de refroidissement pour refroidir le dispositif formant condensateur (30), dans laquelle la pompe à chaleur (70) peut fonctionner afin de transmettre la chaleur du milieu de refroidissement quittant le dispositif formant condensateur (30) au milieu chauffant quittant l'évaporateur (27), dans laquelle au moins un échangeur de chaleur (58) est associé au circuit de chauffe (50) ou au circuit de refroidissement (60), à l'aide duquel de la chaleur de l'installation peut être dissipée, dans laquelle est associé au circuit de chauffe (50) ou au circuit de refroidissement (60) un dispositif de chauffage (56), par exemple, un injecteur à jet de vapeur, **caractérisée en ce que** l'échangeur de chaleur (58) et le dispositif de chauffage (56) sont associés au même circuit, circuit de chauffe (50) ou circuit de refroidissement (60).

2. Installation selon la revendication 1, **caractérisée en ce qu'**elle comprend une pompe de compresseur (38), laquelle est agencée pour comprimer des vapeurs résiduelles sortant sous forme de gaz du dispositif formant condensateur (30).

3. Installation selon la revendication 2, **caractérisée en ce que** dans le sens d'écoulement des vapeurs résiduelles est disposé, derrière la pompe de compresseur (38), un séparateur (40) pour séparer les composants liquides des vapeurs résiduelles ainsi que, le cas échéant, un échangeur de chaleur aromatique (44), lequel est agencé pour transmettre la chaleur des composants liquides des vapeurs résiduelles au milieu de refroidissement.

4. Installation selon l'une des revendications précédentes, **caractérisée en ce qu'**elle comprend dans le sens d'écoulement de la boisson alcoolisée avant l'alimentation de la colonne de rectification (26) au moins un dispositif pour préchauffer la boisson alcoolisée, le cas échéant, un échangeur de chaleur (16), lequel est agencé pour transmettre la chaleur de la boisson désalcoolisée à la boisson alcoolisée, et / ou un échangeur de chaleur (18), lequel est disposé pour transmettre la chaleur du milieu chauffant à la boisson alcoolisée.

5. Installation selon l'une des revendications précédentes, **caractérisée en ce que** dans le sens d'écoulement de la boisson alcoolisée est prévu, avant l'alimentation de la colonne de rectification (26), un dispositif de dégazage (20), lequel comprend, de préférence, un séparateur (22), dans laquelle, le cas échéant, le dispositif de dégazage (20) est relié de manière telle au dispositif formant condensateur (30) que celui-ci peut dissiper des gaz dégagés de la boisson alcoolisée conjointement avec les vapeurs extraites de la tête de la colonne de rectification (26).

6. Installation selon la revendication 5, **caractérisée en ce que** le dispositif de dégazage (20) comprend un faisceau de tubes de courant descendant, lequel peut être chauffé, de préférence, à l'aide d'un dispositif de chauffage.

7. Installation selon l'une de revendications précédentes, **caractérisée en ce que** le dispositif formant condensateur (30) comprend au moins un condensateur à faisceau de tubes disposé horizontalement (30a) et / ou au moins un condensateur à faisceau de tubes disposé verticalement (30b).

8. Installation selon la revendication 7, **caractérisée en ce que** le dispositif formant condensateur (30) dans le sens d'écoulement des vapeurs comprend d'abord un condensateur à faisceau de tubes disposé horizontalement (30a) et, ensuite, un condensateur à faisceau de tubes disposé verticalement (30b), dans laquelle, de préférence, le milieu de refroidissement s'écoule d'abord à travers le condensateur à faisceau de tubes disposé verticalement (30a) et ensuite, à travers le condensateur à faisceau de tubes disposé horizontalement (30b).

9. Procédé pour désalcooliser des boissons alcoolisées dans une colonne de rectification, à réaliser dans une installation (10) selon l'une des revendications précédentes, dans lequel une boisson désalcoolisée située dans le pied de la colonne de rectification (26) et des vapeurs situées dans la tête de la colonne de rectification (26) se rassemblent,
dans lequel la colonne de rectification (26) est alimentée de vapeur par au moins un évaporateur (27), et dans lequel les vapeurs provenant de la tête de la colonne de rectification (26) sont condensées dans un dispositif formant condensateur (30) ;
dans lequel non seulement le au moins un évaporateur (27) mais aussi le dispositif formant condensateur (30) sont activés par une pompe de chaleur individuelle.

10. Procédé selon la revendication 9, **caractérisé en ce que** de l'eau, par exemple, de l'eau de brassage, est amenée à l'évaporateur pour évaporation.
